# EUROPEAN PATENT APPLICATION

(11) **EP 3 992 812 A1**
(43) Date of publication of application: **04.05.2022**
(21) Application number: 20830538.3
(22) Date of filing: 09.06.2020
(51) Int. Cl.: G06F 16/33

(54) **LOG MANAGEMENT METHOD AND APPARATUS, NETWORK DEVICE AND READABLE STORAGE MEDIUM**

(30) Priority: 28.06.2019 CN 201910579380
(71) Applicant: ZTE Corporation, Shenzhen, Guangdong 518057 (CN)
(72) Inventor: HAN, Jing, Shenzhen, Guangdong 518057 (CN); LIU, Jianwei, Shenzhen, Guangdong 518057 (CN); YE, Feng, Shenzhen, Guangdong 518057 (CN); CHEN, Li, Shenzhen, Guangdong 518057 (CN); WANG, Chaofeng, Shenzhen, Guangdong 518057 (CN)
(74) Representative: Ipsilon
(86) International application number: PCT/CN2020/095162
(87) International publication number: WO 2020/259280

(57) **Abstract**

A log management method, a log management apparatus, a network device and a readable storage medium are provided. The log management method includes: determining keywords in logs to be extracted (S101); determining a word weight corresponding to each keyword (S102); calculating edit distances between logs based on log entries and the word weights (SI03); clustering the logs based on the edit distances between the logs (SI04); and extracting a log trunk from a clustering result (S105).

## Description

### TECHNICAL FIELD

The present disclosure relates to, but is not limited to, the field of computer technology.

### BACKGROUND

With the development and increasing maturity of cloud computing technology, complexity of a system is gradually increased, and large-scale log data is generated. The log data records states of internal operations of the system, and technicians can know and optimize behaviors of the system and detect system abnormity according to the log data. As the amount of log data of 5G and an underlying support platform Iaas/Paas become larger, operation and maintenance of the system become difficult, and it is far from sufficient to only depend on manual analysis. Log trunk extraction is adopted in the existing art for facilitating analysis and processing of logs. However, there are few clustering means in the current log trunk extraction means, resulting in poor accuracy of log trunk extraction. Therefore, how to improve the accuracy of log trunk extraction has become an urgent problem to be solved.

### SUMMARY

The embodiments of the present disclosure provide a log management method, including: determining keywords in logs to be extracted; determining a word weight corresponding to each keyword; calculating edit distances between logs based on log entries and the word weights; clustering the logs based on the edit distances between the logs; and extracting a log trunk from a result of the clustering.

The embodiments of the present disclosure further provide a log management apparatus, including: a keyword extraction module configured to determine keywords in logs to be extracted; a word weight determination module configured to determine a word weight corresponding to each keyword; an edit distance calculation module configured to calculate edit distances between logs based on log entries and the word weights; a clustering module configured to cluster the logs based on the edit distances between the logs; and a trunk extraction module configured to extract a log trunk from a clustering result.

The embodiments of the present disclosure further provide a network device, including a processor, a memory and a communication bus. The communication bus is configured to implement connection and communication between the processor and the memory; and the processor is configured to execute one or more computer programs stored in the memory to perform any one of the log management methods described herein.

The embodiments of the present disclosure further provide a computer-readable storage medium having one or more computer programs stored therein. The one or more computer programs are executable by one or more processors to perform any one of the log management methods described herein.

### BRIEF DESCRIPTION OF THE DRAWINGS

Fig. 1 is a flowchart illustrating a log management method according to some embodiments of the present disclosure;
Fig. 2 is a flowchart illustrating an edit distance calculation method according to some embodiments of the present disclosure;
Fig. 3 is a flowchart illustrating a clustering method according to some embodiments of the present disclosure;
Fig. 4 is a flowchart illustrating a word weight calculation method according to some embodiments of the present disclosure;
Fig. 5 is a flowchart illustrating a word weight calculation method according to some embodiments of the present disclosure;
Fig. 6 is a schematic diagram of a log management apparatus according to some embodiments of the present disclosure; and
Fig. 7 is a schematic structural diagram of a network device according to some embodiments of the present disclosure.

### DETAILED DESCRIPTION

In order to make the objectives, technical solutions and advantages of the present disclosure clearer, the embodiments of the present disclosure are further described in detail below with reference to the exemplary implementations and the accompanying drawings. It should be understood that the exemplary embodiments described herein are only intended to explain the present disclosure and are not intended to limit the present disclosure.

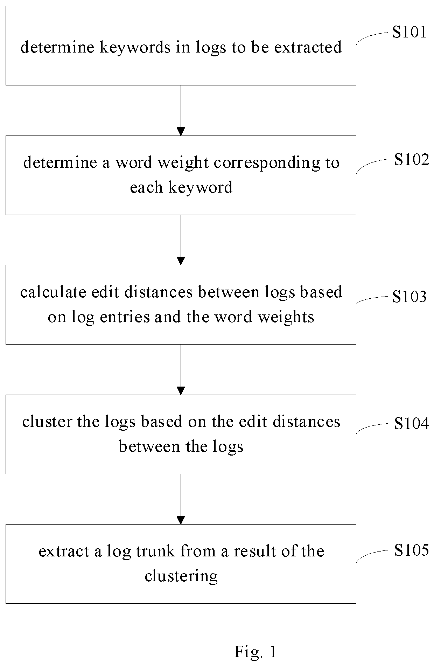

In some embodiments of the present disclosure, a log management method is provided. Referring to Fig. 1, the log management method includes the following operations S101 to S105.

At operation S101, keywords in logs to be extracted are determined.

At operation S102, a word weight corresponding to each keyword is determined.

At operation S103, edit distances between logs are calculated based on log entries and the word weights.

At operation S104, the logs are clustered based on the edit distances between the logs.

At operation S105, a log trunk is extracted from a clustering result.

The extraction of the log trunk is to facilitate management of the logs and compress the number of logs to be processed, and can directly influence effects of anomaly detection of system and fault location. In each embodiment of the present disclosure, dissimilarity is accurately measured according to the edit distances and the word weights of the keywords, and the logs are clustered based on the dissimilarity. The edit distance is an important metric for measuring dissimilarity between texts, and is commonly used in the field of text clustering. The edit distance is a way of quantifying how dissimilar two strings (e.g., English words) are to each other by counting the minimum number of operations required to transform one string into the other. The edit distance can be used in natural language processing, for example, spelling check can determine which one or more words may be candidate words according to edit distances between one misspelled word and other correct words. Since DNA can be regarded as a string composed of A, C, G and T, the edit distance is also used in bioinformatics to determine similarity between two DNAs. There are several different definitions of the edit distance, and the several different definitions differ in processing of strings as follows.

Levenshtein distance is a commonly-used definition of the edit distance, and allows for deletion, insertion and substitution of any one character in a string. In addition, there are the other definitions of the edit distance, such as Damerau-Levenshtein distance, which is a variant of the Levenshtein distance and allows interchanging two adjacent characters (character transposition) by a single operation. For example, a distance of AB→BA is 1 (interchanging) instead of 2 (first deleting and then inserting, or substituting twice).

Longest common subsequence (LCS) distance only allows for deletion and insertion of a character.

Jaro distance only allows for character transposition.

Hamming distance only allows for substitution of a character.

The above edit distances are applicable to each embodiment of the present disclosure; and in practical applications, a specific edit distance is calculated with reference to word weights.

The word weight means a weight of a word corresponding to a keyword in a log. For all words in a log, the greater the weight of a keyword is, the greater of an influence of the keyword on clustering of the log is when an edit distance is calculated. For example, for a log A and a log B both containing a keyword x with a great weight, an edit distance between A and B which is calculated with reference to the word weight is smaller than an edit distance between A and B which is directly calculated due to the presence of x. In this way, a more real clustering effect may be achieved in a clustering process.

In some embodiments, determining the keywords in the logs to be extracted may include: determining words except a vocabulary in a preset form in the logs as the keywords. The vocabulary in the preset form, such as some set phrases, prepositions and conjunctions, has no specific meaning and is only used for transition, and thus is not regarded as the keywords. The keywords are a vocabulary which has actual meanings and may affect the logs, such as verbs which may indicate actions in the logs and nouns which may indicate executors or execution objects of the logs.

In some embodiments, determining the words expect the vocabulary in the preset form in the logs as the keywords may include: removing the vocabulary in the preset form from the logs by using a regular expression, and taking the remaining words as the keywords.

In some embodiments, determining the word weight corresponding to each keyword may include: calculating a first word weight based on a part of speech of the keyword, and outputting the first word weight as a result. In the embodiments, the word weight may be directly determined according to the part of speech of the keyword, for example, verbs and nouns have greater weights, and adjectives and adverbs have smaller weights.

In some embodiments, calculating the first word weight based on the part of speech of the keyword may include: inputting the keyword into a part-of-speech tagger to obtain the part of speech of the keyword; and assigning a weight to the keyword according to the part of speech to obtain the first word weight. The parts of speech include noun, verb, adjective and others.

In some embodiments, determining the word weight corresponding to each keyword may further include: after calculating the first word weight based on the part of speech of the keyword, determining whether a clustering and/or classification label exists, if so, calculating a second word weight based on Term Frequency-Inverse Document Frequency (tf-idf); and averaging the first word weight and the second word weight to obtain an average word weight, and outputting the average word weight as a result. Besides the method of directly calculating the word weight according to the part of speech, whether the second word weight is calculated based on the tf-idf may be determined according to whether the clustering and/or classification label exists. If so, an arithmetic mean or a weighted mean of the first word weight and the second word weight may be obtained to obtain the average word weight, which is output as a final word weight.

In some embodiments, calculating the second word weight based on the tf-idf may include: sorting classification and text features according to the clustering and/or classification label, and calculating a tf-idf weight of the word.

In some embodiments, determining the word weight corresponding to each keyword may include: training a part-of-speech probability neural network model; assigning weights to keywords with different parts of speech for log trunk extraction; calculating probability of each part of speech based on a neural network; and calculating a weighted sum of the probability of the part of speech and the weight of the part of speech and taking the weighted sum as the word weight.

In some embodiments, training the part-of-speech probability neural network model includes: training the part-of-speech probability neural network model based on an existing data set. Training the part-of-speech probability neural network model is to train a part-of-speech model based on existing Chinese and English data sets, and the model may determine a part-of-speech probability value of each word, such as a verb, a noun and an adjective, in a single sentence.

In some embodiments, assigning the weights to the keywords with different parts of speech for log trunk extraction may include: based on prior knowledge, presetting weights of words with different parts of speech according to their influences on log trunk extraction. The prior knowledge refers to empirical conclusions obtained in history extraction processes. For files in the log, weights of certain words in a history log are used as a reference for this time of log trunk extraction. The preset weights may be adjusted according to different log data sets.

In some embodiments, calculating the edit distances between the logs based on the log entries and the word weights may include: traversing all lexeme pairs between two logs, and updating an edit distance matrix according to the word weights; and taking an element at the lower left corner of the edit distance matrix as the edit distance.

In some embodiments, clustering the logs based on the edit distances between the logs may include: calculating a log distance adjacency matrix based on the edit distances between the logs; calculating dissimilarity between a current log and each cluster in a set; and adding a log with dissimilarity smaller than or equal to a threshold to a current cluster, adding a log with dissimilarity larger than the threshold to a new cluster, and updating cluster information. Setting a threshold is a way for determining whether two logs belong to the same cluster. If the dissimilarity between the two logs is smaller than or equal to the threshold, it is indicated that the current log is close to the other log belonging to an existing cluster and the two logs may be classified into the same cluster, so that the current log is added to the current cluster in such case; but if the dissimilarity between the two logs is greater than the threshold, it is indicated that the current log is far from the log belonging to the existing cluster, so that a new cluster is created based on the current log and the current log is classified into the new cluster in such case.

In some embodiments, before calculating the log distance adjacency matrix based on the edit distances between the logs, the method may further include: performing an initialization operation on a cluster set. The initialization operation includes: initializing the set, in which each log is one cluster.

In some embodiments, calculating the dissimilarity between the current log and each cluster in the set may include: traversing all clusters in the set, calculating the dissimilarity between the log and each cluster, and searching for a cluster with the minimum dissimilarity. The dissimilarity here is a maximum value among edit distances between the current log and the logs in the clusters.

The present disclosure provides the log management method, which includes determining the keywords in the logs to be extracted; determining the word weight corresponding to each keyword; calculating the edit distances between logs based on log entries and the word weights; clustering the logs based on the edit distances between the logs; and extracting the log trunk from the clustering result. Clustering is performed with reference to the word weights of the keywords and the edit distances, which remarkably increases accuracy of log trunk extraction, is easy to implement, and achieves a high clustering efficiency.

Other embodiments of the present disclosure provide a log management method, and

Fig. 1 is a flowchart illustrating a log trunk extraction method based on an edit distance with a word weight according to embodiments of the present disclosure. As shown in Fig. 1, the method includes the following operations S101 to S105.

At operation S101, keywords in logs to be extracted are determined.

At operation S102, a word weight corresponding to each keyword is determined.

At operation S103, edit distances between logs are calculated based on log entries and the word weights.

At operation S104, the logs are clustered based on the edit distances between the logs.

At operation S105, a log trunk is extracted from a clustering result.

In some embodiments, extracting the keywords from the logs includes: removing some parameters in a known form from the logs by using a regular expression, and taking the remaining words as the keywords.

In some embodiments, the word weight may be calculated by adopting any one of the word weight calculation methods disclosed in the embodiments of the present disclosure, or by adopting a combination thereof.

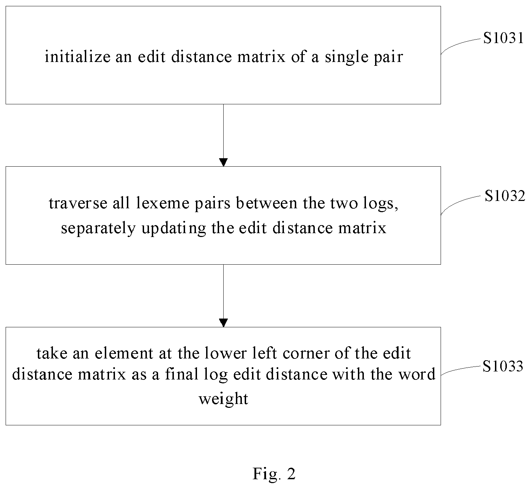

In some embodiments, referring to Fig. 2, for each pair of logs, calculating an edit distance with a word weight between logs includes the following operations S1031 to S1033.

At operation S1031, an edit distance matrix of a single pair is initialized.

At operation S1032, all lexeme pairs between the two logs are traversed, the edit distance matrix is separately updated, and calculated word weight information is used when calculating a transfer cost during updating.

At operation S1033, an element at the lower left corner of the edit distance matrix is taken as a final log edit distance with the word weight, and the final log edit distance with the word weight is filled into a corresponding position and a diagonal position in a log distance adjacency matrix.

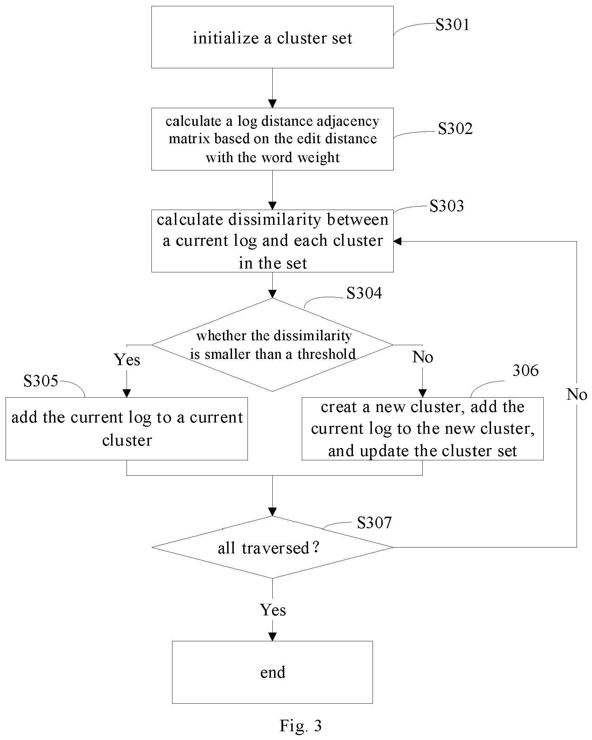

In some embodiments, referring to Fig. 3, clustering based on the edit distance with the word weight includes the following operations S301 to S307.

At operation S301, a cluster set is initialized.

At operation S302, a log distance adjacency matrix is calculated based on the edit distance with the word weight.

At operation S303, dissimilarity between a current log and each cluster in the set is calculated.

At operation S304, whether the dissimilarity is smaller than a threshold is determined, if so, the operation S305 is performed, otherwise, the operation S306 is performed.

At operation S305, the current log is added to a current cluster.

At operation S306, a new cluster is created, the current log is added to the new cluster, and the cluster set is updated.

At operation S307, whether the log is traversed is determined, if so, the clustering process is terminated, otherwise, the operation S303 is performed to continue the clustering process.

In some embodiments, initializing the cluster set includes: initializing an empty set, in which each element is one cluster.

In some embodiments, calculating the log distance adjacency matrix based on the edit distance with the word weight may include: firstly initializing the log distance adjacency matrix, then calculating an edit distance with a word weight of a single pair of logs, filling and updating the log distance adjacency matrix, and compressing an adjacency matrix structure.

In some embodiments, calculating the dissimilarity between the current log and each cluster in the set includes: traversing all clusters in the set, calculating the dissimilarity between the current log and each cluster, and searching for a cluster with the minimum dissimilarity. The dissimilarity here is a maximum value among edit distances with the word weight between the current log and the logs in the clusters.

In some embodiments, extracting the log trunk from the clustering result includes: extracting a trunk from each cluster after the clusters are stable, keeping all the words belonging to the trunk, and deleting the remaining words or substituting the remaining words with <p>. It should be understood that all the words belonging to the trunk appear in more than a half of the logs in the classification,

Through the description of the above embodiments, it can be seen that, according to the method shown in Fig. 2, after information about the logs is acquired, the keywords are extracted from the logs, the word weights are calculated, an edit distance with a word weight between logs is calculated for each log, the clustering process is performed based on the edit distances with the word weight, and then the log trunk is extracted from the clustering result. The method can help those of ordinary skill in the art effectively extract a log trunk with high extraction accuracy, and facilitate subsequent operations such as log classification, log analysis and anomaly detection.

By applying the word weights and the edit distances to the field of log trunk extraction the present disclosure can better extract log features, and improves trunk extraction accuracy and performance. Meanwhile, compared with that in the existing art, the log trunk extraction method herein improves trunk extraction effects and stability by taking full advantage of a semi-structured characteristic of the logs on the basis that a fast speed is ensured and real-time log analysis is achieved. In addition, the result of the method is easy to recur, and it is convenient for professionals to perform subsequent analysis.

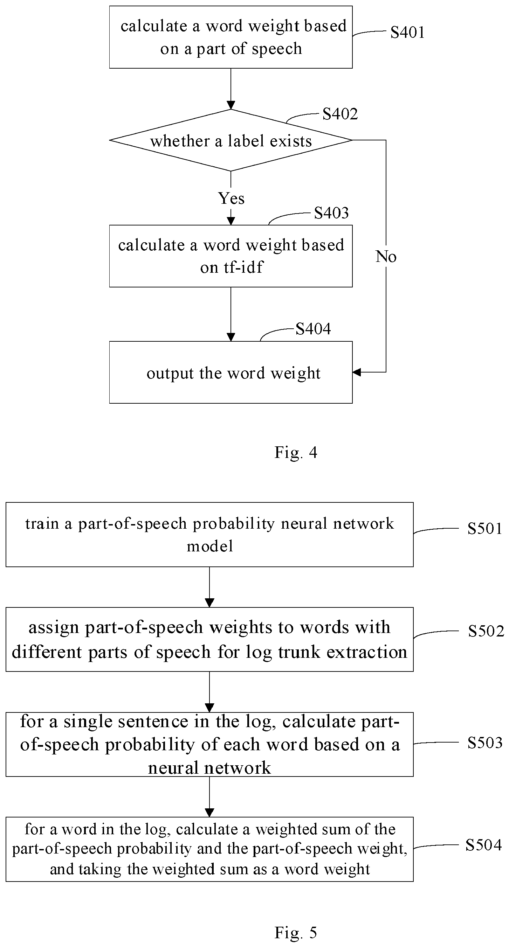

Other embodiments of the present disclosure provide a word weight calculation method, and Fig. 4 is a flowchart illustrating a word weight calculation method according to embodiments of the present disclosure. As shown in Fig. 4, the method includes the following operations S401 to S404.

At operation S401, a word weight is calculated based on a part of speech.

At operation S402, whether a manual clustering and/or classification label exists is determined, if so, the operation S403 is performed, otherwise, the operation S404 is performed.

At operation S403, a word weight is calculated based on tf-idf, and an average value by averaging the word weight with the word weight obtained in operation S401 is obtained.

At operation S404, the word weight is output.

Extracting the keywords from the logs includes: removing some parameters in a known form from the logs by using a regular expression, and taking the remaining words as the keywords.

In some embodiments, calculating the word weight base on the part of speech includes: inputting a keyword into an nltk part-of-speech tagger to obtain the part of speech of the word; assigning a weight to the word according to the part of speech, with a weight 3 assigned to nouns and verbs, a weight 2 to adjectives, and a weight 1 to other words. The weight 3 is greater than the weight 2, and the weight 2 is greater than the weight 1, that is, contents words, such as nouns and verbs, have a greater weight.

In some embodiments, calculating the word weight based on the tf-idf includes: sorting classification and text features according to a manually intervened clustering and/or classification label; calculating a tf-idf weight of the word; and ranking the words from largest to smallest according to the tf-idf weights of the words, assigning the weight 3 to the words in the first 30%, the weight 2 to the words from 30% to 60%, and the weight 1 to the words from 60% to 100%.

Through the above operations, the keywords are extracted from the logs, the word weights are calculated based on the parts of speech, the word weights based on the tf-idf are calculated after determining whether the manual clustering and/or classification label exists, and the word weights are outputted. Thus, the word weights can be calculated, which can facilitate analysis of semi-structured texts, such as frequent item detection of logs and abnormal detection of logs.

Other embodiments of the present disclosure provide a word weight calculation method for part-of-speech determination based on a neural network with reference to a log feature. Fig. 5 is a flowchart illustrating a word weight calculation method according to embodiments of the present disclosure, and the method includes the following operations S501 to S504.

At operation S501, a part-of-speech probability neural network model is trained.

At operation S502, part-of-speech weights are assigned to words with different parts of speech for log trunk extraction;

At operation S503, for a single sentence in the log, part-of-speech probability of each word is calculated based on a neural network.

At operation S504, for a word in the log, a weighted sum of the part-of-speech probability and the part-of-speech weight is calculated, and the weighted sum is taken as a word weight.

In some embodiments, training the part-of-speech probability neural network model includes: training the part-of-speech probability neural network model based on existing Chinese and English data sets, and the model may determine a part-of-speech probability value of each word, such as a verb, a noun and an adjective, in the single sentence.

In some embodiments, assigning the weights to the keywords with different parts of speech for log trunk extraction includes: based on prior knowledge, manually presetting weights of words with different parts of speech according to their influences on log trunk extraction. The preset weights may be adjusted according to different log data sets.

In some embodiments, word weights of a same word in different sentences may be averaged and calculated again to obtain a final word weight of the word, which saves subsequent calculation consumption.

Through the above operations, the part-of-speech probability neural network model is trained; the weights are assigned to the words with different parts of speech for log trunk extraction; for the single sentence in the log, the part-of-speech probability of each word is calculated based on the neural network; and for the word in the log, the weighted sum of the part-of-speech probability and the part-of-speech weight is calculated and taken as the word weight. The method calculates the part-of-speech probability with the neural network, and calculates the word weights with reference to the prior knowledge, which can effectively help those of ordinary skill in the art accurately determine the influences of the words on current sentence processing, avoid the limitation of the determination directly made according to the prior knowledge or statistical information, and provide more reliable basis for subsequent processing.

By calculating the word weights with the neural network, the present disclosure avoids the limitation caused by directly adopting the prior knowledge or statistical information for overall processing; for the same word in different sentences, the neural network can determine the part of speech of the word more accurately, which can effectively increases a recognition rate of ambiguous words; and an weighting operation based on the part-of-speech weight is carried out with reference to the prior knowledge, so that a more accurate word weight can be obtained, thereby facilitating subsequent log processing.

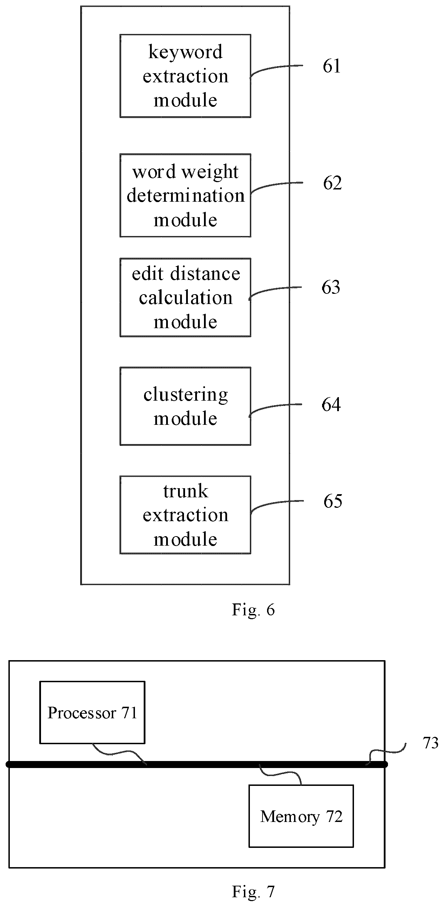

Other embodiments of the present disclosure provide a log management apparatus. Referring to Fig. 6, the apparatus includes: a keyword extraction module 61 configured to determine keywords in logs to be extracted; a word weight determination module 62 configured to determine a word weight corresponding to each keyword; an edit distance calculation module 63 configured to calculate edit distances between logs based on log entries and the word weights; a clustering module 64 configured to cluster the logs based on the edit distances between the logs; and a trunk extraction module 65 configured to extract a log trunk from a clustering result.

In some embodiments, determining the keywords in the logs to be extracted may include: determining words except a vocabulary in a preset form in the logs as the keywords.

In some embodiments, determining the words expect the vocabulary in the preset form in the logs as the keywords may include: removing the vocabulary in the preset form from the logs by using a regular expression, and taking the remaining words as the keywords.

In some embodiments, determining the word weight corresponding to each keyword may include: calculating a first word weight based on a part of speech of the keyword, and outputting the first word weight as a result.

In some embodiments, calculating the first word weight based on the part of speech of the keyword may include: inputting the keyword into a part-of-speech tagger to obtain the part of speech of the keyword; and assigning a weight to the keyword according to the part of speech to obtain the first word weight. The parts of speech include noun, verb, adjective and others.

In some embodiments, determining the word weight corresponding to each keyword may further include: after calculating the first word weight based on the part of speech of the keyword, determining whether a clustering and/or classification label exists, if so, calculating a second word weight based on tf-idf; and averaging the first word weight and the second word weight to obtain an average word weight, and outputting the average word weight as a result.

In some embodiments, calculating the second word weight based on the tf-idf may include: sorting classification and text features according to the clustering and/or classification label, and calculating a tf-idf weight of the word.

In some embodiments, determining the word weight corresponding to each keyword may include: training a part-of-speech probability neural network model; assigning weights to keywords with different parts of speech for log trunk extraction; calculating probability of each part of speech based on a neural network; and calculating a weighted sum of the probability of the part of speech and the weight of the part of speech and taking the weighted sum as the word weight.

In some embodiments, training the part-of-speech probability neural network model includes: training the part-of-speech probability neural network model based on an existing data set.

In some embodiments, assigning the weights to the keywords with different parts of speech for log trunk extraction may include: based on prior knowledge, presetting weights of words with different parts of speech according to their influences on log trunk extraction.

In some embodiments, calculating the edit distances between the logs based on the log entries and the word weights may include: traversing all lexeme pairs between two logs, and updating an edit distance matrix according to the word weights; and taking an element at the lower left corner of the edit distance matrix as the edit distance.

In some embodiments, clustering the logs based on the edit distances between the logs may include: calculating a log distance adjacency matrix based on the edit distances between the logs; calculating dissimilarity between a current log and each cluster in a set; and adding a log with dissimilarity smaller than or equal to a threshold to a current cluster, adding a log with dissimilarity larger than the threshold to a new cluster, and updating cluster information.

In some embodiments, before calculating the log distance adjacency matrix based on the edit distances between the logs, the method may further include: performing an initialization operation on a cluster set. The initialization operation includes: initializing the set, in which each log is one cluster.

In some embodiments, calculating the dissimilarity between the current log and each cluster in the set may include: traversing all clusters in the set, calculating the dissimilarity between the log and each cluster, and searching for a cluster with the minimum dissimilarity. The dissimilarity here is a maximum value among edit distances between the current log and the logs in the clusters.

Other embodiments of the present disclosure provide a network device. As shown in Fig. 7, the network device includes a processor 71, a memory 72 and a communication bus 73. The communication bus 73 is configured to implement connection and communication between the processor 71 and the memory 72; and the processor 71 is configured to execute one or more computer programs stored in the memory 72 to perform the operations of the log management method according to each of the above embodiments, which are not repeated here.

The embodiments further provide a computer-readable storage medium, which includes volatile/nonvolatile and removable/non-removable media used in any method or technology for storing information (such as computer-readable instructions, data structures, computer program modules or other data). The computer-readable storage medium includes, but is not limited to, a Random Access Memory (RAM), a Read-Only Memory (ROM), an Electrically Erasable Programmable Read-Only Memory (EEPROM), a flash memory or other storage technology, a Compact Disc Read-Only Memory (CD-ROM), a Digital Video Disk (DVD) or other optical discs, a magnetic cassette, a magnetic tape, a magnetic disk or other magnetic storage devices, or any other medium which can be used to store the desired information and can be accessed by a computer.

The computer-readable storage medium provided by the embodiments may be configured to store one or more computer programs capable of being executed by a processor to implement at least one operation of the log management method provided in each of the above embodiments.

The embodiments further provide a computer program (or computer software), which may be distributed on a computer-readable medium and executed by a computing system to implement at least one operation of the log management method provided in each of the above embodiments.

The embodiments further provide a computer program product, including a computer-readable system having the above computer program stored therein. In the embodiments, the computer-readable system may include the above computer-readable storage medium.

Apparently, it should be understood by those of ordinary skill in the art that the functional modules/units in all or some of the operations, the systems and the devices in the methods disclosed above may be implemented as software (which may be implemented as computer program codes executable by a computing system), firmware, hardware, or suitable combinations thereof. If implemented as hardware, the division between the functional modules/units described above is not necessarily corresponding to the division of physical components; for example, one physical component may have a plurality of functions, or one function or operation may be performed through cooperation of several physical components. Some or all of the physical components may be implemented as software executed by a processor, such as a central processing unit, a digital signal processor or a microprocessor, or may be implemented as hardware, or may be implemented as an integrated circuit, such as an application specific integrated circuit.

In addition, it is well known by those of ordinary skill in the art that communication media generally include computer-readable instructions, data structures, computer program modules or other data in a modulated data signal, such as a carrier wave or other transmission mechanism, and can include any information delivery media. Therefore, the present disclosure is not limited to any specific combination of hardware and software.

The above is a further detailed description of the embodiments of the present disclosure in conjunction with the exemplary implementations, but the exemplary implementations of the present disclosure are not limited to the above description. Several simple deductions or substitutions can be made by those of ordinary skill in the art without departing from the concept of the present disclosure, and should be considered to fall within the scope of the present disclosure.

## Claims

1. A log management method, comprising:
determining keywords in logs to be extracted;
determining a word weight corresponding to each keyword;
calculating edit distances between logs based on log entries and the word weights;
clustering the logs based on the edit distances between the logs; and
extracting a log trunk from a result of the clustering.

2. The log management method of claim 1, wherein the determining the keywords in the logs to be extracted comprises:
determining words except a vocabulary in a preset form in the logs as the keywords.

3. The log management method of claim 2, wherein the determining the words expect the vocabulary in the preset form in the logs as the keywords comprises:
removing the vocabulary in the preset form from the logs by using a regular expression, and taking remaining words as the keywords.

4. The log management method of claim 1, wherein the determining the word weight corresponding to each keyword comprises:
calculating a first word weight based on a part of speech of the keyword, and outputting the first word weight as a result.

5. The log management method of claim 4, wherein the calculating the first word weight based on the part of speech of the keyword comprises:
inputting the keyword into a part-of-speech tagger to obtain the part of speech of the keyword; and assigning a weight to the keyword according to the part of speech to obtain the first word weight; wherein the part of speech comprises noun, verb and adjective.

6. The log management method of claim 4, wherein the determining the word weight corresponding to each keyword further comprises:
after the calculating the first word weight based on the part of speech of the keyword,
determining whether a clustering and/or classification label exists, if so, calculating a second word weight based on Term Frequency-Inverse Document Frequency (tf-idf); and
averaging the first word weight and the second word weight to obtain an average word weight, and outputting the average word weight as a result.

7. The log management method of claim 6, wherein the calculating the second word weight based on the tf-idf comprises:
sorting classification and text features according to the clustering and/or classification label, and calculating a tf-idf weight of the word.

8. The log management method of any one of claims 1 to 7, wherein the determining the word weight corresponding to each keyword comprises:
training a part-of-speech probability neural network model;
assigning weights to keywords with different parts of speech for log trunk extraction;
calculating probability of each part of speech based on a neural network; and
calculating a weighted sum of the probability of the part of speech and the weight of the part of speech and taking the weighted sum as the word weight.

9. The log management method of claim 8, wherein the training the part-of-speech probability neural network model comprises:
training the part-of-speech probability neural network model based on an existing data set.

10. The log management method of claim 8, wherein the assigning the weights to the keywords with different parts of speech for log trunk extraction comprises:
presetting weights of words with different parts of speech according to their influences on log trunk extraction.

11. The log management method of any one of claims 1 to 7, wherein the calculating the edit distances between logs based on the log entries and the word weights comprises:
traversing all lexeme pairs between two logs, and updating an edit distance matrix according to the word weights; and
taking an element at a lower left corner of the edit distance matrix as the edit distance.

12. The log management method of any one of claims 1 to 7, wherein the clustering the logs based on the edit distances between the logs comprises:
calculating a log distance adjacency matrix based on the edit distances between the logs;
calculating dissimilarity between a current log and each cluster in a set; and
adding a log with dissimilarity smaller than or equal to a threshold to a current cluster, adding a log with dissimilarity larger than the threshold to a new cluster, and updating cluster information.

13. The log management method of claim 12, before the calculating the log distance adjacency matrix based on the edit distances between the logs, further comprising:
performing an initialization operation on a cluster set, wherein the initialization operation comprises: initializing the set, in which each log is one cluster.

14. The log management method of claim 12, wherein the calculating the dissimilarity between the current log and each cluster in the set comprises:
traversing all clusters in the set, calculating the dissimilarity between the log and each cluster, and searching for a cluster with the minimum dissimilarity; wherein the dissimilarity is a maximum value among edit distances between the current log and the logs in all the clusters in the set.

15. A log management apparatus, comprising:
a keyword extraction module configured to determine keywords in logs to be extracted;
a word weight determination module configured to determine a word weight corresponding to each keyword;
an edit distance calculation module configured to calculate edit distances between logs based on log entries and the word weights;
a clustering module configured to cluster the logs based on the edit distances between the logs; and
a trunk extraction module configured to extract a log trunk from a clustering result.

16. A network device, comprising a processor, a memory and a communication bus, wherein
the communication bus is configured to implement connection and communication between the processor and the memory; and
the processor is configured to execute one or more computer programs stored in the memory to perform the log management method of any one of claims 1 to 14.

17. A computer-readable storage medium, storing one or more computer programs, wherein the one or more computer programs are executable by one or more processors to perform the log management method of any one of claims 1 to 14.
